# FASCICULE DE BREVET EUROPEEN

(11) **EP 3 053 309 B1**
(45) Date de publication et mention de la délivrance du brevet: **03.05.2023**
(21) Numéro de dépôt: 14796197.3
(22) Date de dépôt: 25.09.2014
(51) Int. Cl.: H04L 12/28, H04W 52/00

(54) **GESTION AMÉLIORÉE DES CONNEXIONS RÉSEAU**
VERBESSERTE VERWALTUNG VON NETZWERKVERBINDUNGEN
IMPROVED MANAGEMENT OF NETWORK CONNECTIONS

(30) Priorité: 30.09.2013 FR 1359446
(43) Date de publication de la demande: 10.08.2016
(73) Titulaire: Orange, 92130 Issy-les-Moulineaux (FR)
(72) Inventeur: FONTAINE, Fabrice, 35850 Geveze (FR); HELOIR, Han, 92800 Puteaux (FR)
(86) Numéro de dépôt international: PCT/FR2014/052408
(87) Numéro de publication internationale: WO 2015/044598

(56) Documents cités:
- EP-A1- 1 895 713
- US-A1- 2010 302 979
- US-A1- 2013 128 753

## Description

### Domaine technique

L'invention se rapporte au domaine des télécommunications et plus particulièrement aux équipements d'un réseau domestique de télécommunications.

De manière générale, l'invention s'applique à tout équipement terminal, ou plus simplement équipement, d'un tel réseau, équipé de plusieurs interfaces de communication.

### Etat de la technique

Un réseau domestique est un réseau informatique qui relie ensemble, avec ou sans fils, les équipements terminaux d'une maison (ordinateurs, périphériques d'impression, de stockage, etc.) aptes à communiquer ensemble. Un réseau domestique comporte un équipement routeur, aussi communément appelé passerelle domestique, ou plus simplement passerelle, élément intermédiaire assurant la redirection, ou routage, des paquets de données entre les différents terminaux et réseaux qui lui sont connectés.

La norme UPnP (de l'anglais « Universal Plug and Play ») a pour but de permettre à des terminaux périphériques de se connecter aisément et de communiquer simplement au sein d'un tel réseau. Elle constitue un ensemble de protocoles de communication basés sur le protocole IP (*Internet Protocol*, protocole de base pour les réseaux de type Internet) et promulgué par le forum de normalisation UPnP (*UPnP Forum*). Pour contrôler les équipements du réseau, UPnP utilise des points de contrôle (en anglais : *Control Points,* en abrégéCP). Un point de contrôle émet classiquement vers les différents équipements du réseau des messages dits de découverte (MSEARCH) afin de récupérer en retour une description des équipements correspondant à la requête. Ces messages de découverte sont émis le plus souvent en mode de communication point vers multipoint, aussi appelé multicast, du point de contrôle vers les équipements. Un équipement terminal compatible avec la norme UPnP répond à ces messages de requête, et émet de surcroît, à fréquence régulière, des messages de présence (ALIVE) pour signifier qu'il est actif et connecté sur le réseau.

Dans le contexte des économies d'énergie, UPnP définit le profil dit « Energy Management » (on pourra se référer à la spécification « EnergyManagement for UPnP 1.0 » du 30 août 2013 du forum UPnP) qui permet aux équipements de publier la liste de leurs interfaces réseaux (nom, description, adresse physique, adresse réseau, type, etc.) et en particulier le statut des interfaces (active, désactivée sans réveil automatique, désactivée avec réveil périodique, etc.) et la méthode de réveil à utiliser pour les sortir d'un état de veille.

Un équipement terminal d'un tel réseau local peut posséder plusieurs interfaces de communication différentes pour dialoguer avec les autres terminaux du même réseau local.

Usuellement, le terminal comporte une interface de type Ethernet permettant de dialoguer en mode filaire sur le réseau via un protocole de communication de type IP et une interface Wifi pour dialoguer sans fils selon ce même protocole IP. L'équipement terminal peut, en outre, posséder une interface utilisant une technologie sans fil radio de basse puissance, grâce à laquelle il est possible d'échanger sur un canal radio des messages conformes à une norme dite « basse énergie ». Au nombre de ces normes « basse énergie », on peut citer par exemple le protocole ZigBee (un protocole qui permet la communication, dans des réseaux locaux, sur un lien radio, avec une consommation réduite), la norme « DECT Ultra Low Energy » (en abrégé DECT ULE, une extension de la norme de communication sans fils DECT pour les applications à basse énergie) ou encore la norme « Bluetooth Low Energy » (en abrégé BLE, dont le but est de fournir une puissance réduite par rapport aux applications standard de la norme Bluetooth).

Les réseaux supportant ces différentes normes consomment peu d'énergie. Dans la suite, on y fera référence sous l'appellation générique de « réseaux à basse consommation », ou encore LoWPAN, acronyme pour « Low power Wireless Personal Area Networks ».

Ces réseaux ne sont pas adaptés aujourd'hui pour transmettre des messages de type multicast car ils ne sont pas basés sur le protocole IP qui permet ce type d'échange. Les messages d'annonce et de découverte de type multicast mentionnés ci-dessus pour la norme UPnP nécessitent donc de maintenir en permanence actives les interfaces de communication IP qui consomment beaucoup d'énergie afin de transmettre les messages d'annonce et de découverte.

L'invention offre une solution ne présentant pas les inconvénients de l'état de la technique.

### L'invention

A cet effet, selon un aspect fonctionnel, l'invention a pour objet un procédé de gestion de la communication sur un réseau entre un premier équipement et un second équipement, lesdits équipements étant aptes à communiquer via un premier lien de communication, dit lien principal, et un second lien de communication, dit lien secondaire, dont la consommation énergétique est inférieure à celle du premier lien de communication, caractérisé en ce qu'il comporte les étapes suivantes :
- Calcul de la validité d'un critère relatif au trafic de données sur au moins un lien;
- En fonction de la validité du critère, gestion de l'activation d'au moins un lien.

Ainsi, par l'analyse du trafic de données sur le lien principal ou sur le lien secondaire, l'invention offre l'avantage de détecter la nécessité d'activer ou désactiver l'une ou l'autre des interfaces. Si le critère est rempli, c'est-à-dire valide, l'invention permet notamment de désactiver le lien principal si celui-ci est peu sollicité, afin de réaliser des économies d'énergie.

Selon un mode de mise en oeuvre particulier de l'invention, un procédé tel que décrit ci-dessus est caractérisé en ce que le critère relatif au trafic de données est un seuil d'utilisation de la bande passante.

Ainsi, le calcul du pourcentage d'utilisation de la bande passante sur le lien principal permet de détecter aisément une sous-utilisation de ce lien, dommageable pour la consommation électrique générale. Dans ce cas il peut être préférable de le désactiver. Au contraire, une sur-utilisation du lien indique clairement sa pertinence. De même, une forte utilisation de la bande-passante du lien secondaire peut indiquer qu'il serait avantageux d'activer le lien principal pour soulager ce lien secondaire.

Selon un second mode de mise en oeuvre particulier de l'invention, qui pourra être mis en oeuvre alternativement ou cumulativement avec le précédent, un procédé tel que décrit ci-dessus est caractérisé en ce que le critère relatif au trafic de données est un message reçu d'un type donné.

Ainsi, la réception par le procédé de l'invention d'un certain type de messages annonciateurs d'un débit plus élevé à venir, par exemple un flux de données multimédia, peut-il inciter à activer le lien principal si celui-ci n'est pas activé, ou au contraire à le désactiver pour une prise en charge du trafic futur par le lien secondaire de données.

Selon un troisième mode de mise en oeuvre particulier de l'invention, qui pourra être mis en oeuvre alternativement ou cumulativement avec les précédents, un procédé tel que décrit ci-dessus est caractérisé en ce que critère relatif au trafic de données est un temps d'attente pour la réception d'un message.

Ce mode de réalisation de l'invention permet, par la prise en compte d'une certaine latence, ou de l'absence de réponse d'un équipement, de rendre compte de la nécessité d'activer l'interface principale pour recevoir et transmettre les messages dans de bonnes conditions de qualité de service.

Selon un quatrième mode de mise en oeuvre particulier de l'invention, qui pourra être mis en oeuvre alternativement ou cumulativement avec les précédents, un procédé tel que décrit ci-dessus est caractérisé en ce qu'il comporte une étape d'activation du lien secondaire du second équipement et une étape de désactivation du lien principal du second équipement si le critère relatif au trafic de données est valide.

Ce mode de réalisation de l'invention permet, par la prise en compte d'un critère relatif au trafic de données, par exemple l'évaluation de la bande passante, d'activer l'interface secondaire de l'équipement et dans le même temps, ou par exemple juste après, de désactiver l'interface principale qui consomme de l'énergie même quand les messages ne transitent pas par le biais de cette interface.

Selon l'art antérieur, il est impossible de désactiver le lien principal, notamment de type IP, puisque celui-ci est indispensable à la diffusion des messages de type multicast. Au contraire, le procédé selon l'invention permet de s'affranchir de cette contrainte en utilisant judicieusement le lien secondaire pour transmettre de tels messages. On peut donc désactiver le lien principal (IP) et réaliser ainsi des économies d'énergie

Selon un cinquième mode de mise en oeuvre particulier de l'invention, qui pourra être mis en oeuvre alternativement ou cumulativement avec les précédents, un procédé tel que décrit ci-dessus est en outre caractérisé en ce qu'il comporte une étape d'activation du lien principal du terminal si le critère n'est pas valide.

Si le critère n'est pas valide, c'est-à-dire par exemple si le trafic a dépassé un certain seuil sur l'un des liens, typiquement le lien secondaire, il est judicieux de rétablir le lien principal s'il avait été préalablement désactivé, par exemple par le procédé de l'invention.

Selon un sixième mode de mise en oeuvre particulier de l'invention, qui pourra être mis en oeuvre alternativement ou cumulativement avec les précédents, un procédé tel que décrit ci-dessus est en outre caractérisé en ce qu'il comporte les étapes suivantes :
- Réception d'un message en provenance du second équipement sur le lien secondaire ;
- mise en forme et retransmission du message vers au moins un autre équipement du réseau.

Ce mode de mise en oeuvre de l'invention permet de retransmettre un message vers le point de contrôle au sens du réseau local UPnP. Le message peut aussi être retransmis en mode multicast vers différents équipements du réseau.

Selon un autre aspect fonctionnel, l'invention concerne aussi un procédé de communication sur un équipement terminal, ledit équipement étant apte à communiquer via un premier lien de communication, dit lien principal, et un second lien de communication, dit lien secondaire, dont la consommation énergétique est inférieure à celle du premier lien de communication, caractérisé en ce qu'il comporte les étapes suivantes :
- mise en forme d'au moins un message pour le lien secondaire et
- envoi dudit message sur le lien secondaire.

Selon un aspect matériel, l'invention concerne également un dispositif de gestion de la communication entre deux équipements, un premier équipement et un second équipement, lesdits équipements étant aptes à communiquer via un premier lien de communication, dit lien principal, et un second lien de communication, dit lien secondaire, dont la consommation énergétique est inférieure à celle du premier lien de communication, caractérisé en ce qu'il comporte :
- Un module d'établissement de la validité d'un critère relatif au trafic de données sur au moins un lien;
- un module de gestion de l'activation d'au moins un lien en fonction de la validité du critère.

Selon un autre aspect matériel, l'invention concerne également une passerelle domestique comportant un tel dispositif de gestion de la communication entre deux équipements.

Selon un autre aspect matériel, l'invention concerne également un dispositif de communication sur un équipement terminal, ledit équipement étant apte à communiquer via un premier lien de communication, dit lien principal, et un second lien de communication, dit lien secondaire, dont la consommation énergétique est inférieure à celle du premier lien de communication, caractérisé en ce qu'il comporte :
- un module de mise en forme d'au moins un message pour le lien secondaire et
- un module d'envoi dudit message sur le lien secondaire:
   Selon un autre aspect matériel, l'invention concerne également une équipement terminal comportant un tel dispositif de communication sur un équipement terminal.

Selon un autre aspect matériel, l'invention concerne également un programme d'ordinateur apte à être mis en oeuvre sur une passerelle domestique comportant un dispositif de gestion de la communication entre deux équipements, le programme comprenant des instructions de code qui, lorsque le programme est exécuté par un processeur, réalise les étapes du procédé de gestion défini au-dessus.

Selon encore un autre aspect matériel, l'invention concerne également un programme d'ordinateur apte à être mis en oeuvre sur un équipement terminal, le programme comprenant des instructions de code qui, lorsque le programme est exécuté par un processeur, réalise les étapes du procédé de communication défini au-dessus.

Cette passerelle domestique, ce terminal et ces programmes d'ordinateur présentent des caractéristiques et avantages analogues à ceux décrits précédemment en relation avec les procédés de gestion et de communication.

Selon encore un autre aspect matériel, l'invention a trait à des supports d'enregistrement lisibles par un processeur de données sur lequel sont enregistrés des programmes comprenant des instructions de code de programme pour l'exécution des étapes des procédés définis ci-dessus.

L'invention sera mieux comprise à la lecture de la description qui suit, donnée à titre d'exemple et faite en référence aux dessins annexés.

### Les figures

La figure 1 représente un réseau domestique correspondant au contexte général de l'invention.
La figure 2 schématise les protocoles utilisés sur un réseau LoWPAN et sur un réseau IP.
La figure 3 représente une architecture d'une passerelle domestique implémentant un mode de réalisation de l'invention.
La figure 4 représente un chronogramme des échanges entre les différents équipements du réseau local lors de la mise en oeuvre de l'invention.

### Description détaillée d'un exemple de réalisation illustrant l'invention

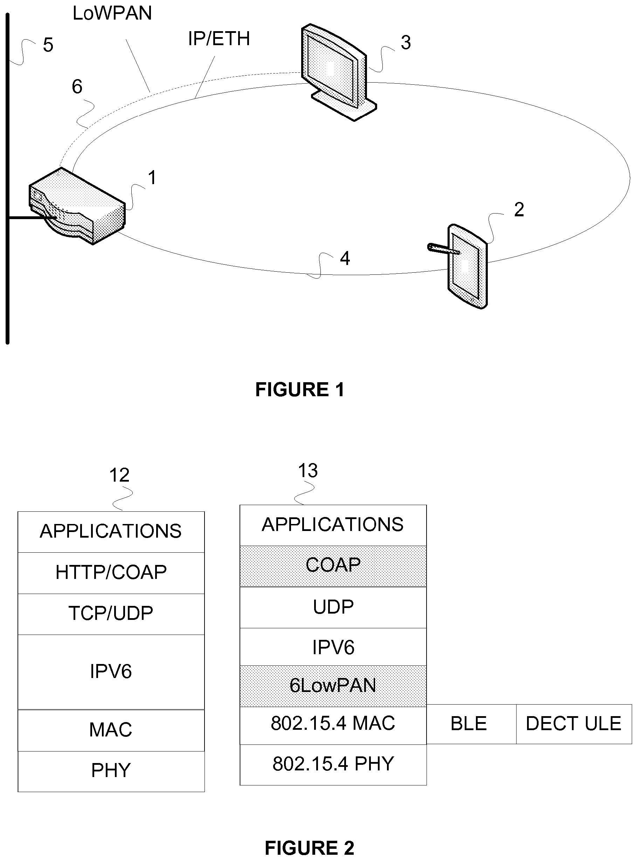

La figure 1 représente un réseau domestique correspondant au contexte général de l'invention.

Le réseau domestique (4) est par exemple un réseau local IP (« Internet Protocol »). Dans cet exemple, le réseau local supporte les fonctionnalités et protocoles de la norme UPnP précitée.

Le réseau domestique (4) comporte une passerelle domestique (1) reliée au réseau Internet (5) par une liaison haut débit. Il comporte aussi dans cet exemple deux équipements terminaux (2,3), aptes à établir des communications sur le réseau local (4).

Par la suite, on entend par équipement terminal, ou plus simplement terminal, tout dispositif apte à se connecter sur le réseau domestique via le protocole UPnP, tel un ordinateur portable, un décodeur numérique de télévision, un disque dur, etc.

Le terminal 3 est par exemple un PC qui joue aussi le rôle de serveur de médias (*Media Server*) au sens de la norme UPnP : il partage des contenus multimédia avec les autres équipements du réseau.

En fonctionnement normal, le PC (3) émet des messages de présence (ALIVE) sur le réseau local au format IP via une première interface Ethernet filaire (IP/ETH), dite interface principale, les paquets de messages étant établis au format IP, par exemple IPv4 (version 4 de la norme IP) ou, de préférence dans le contexte de l'invention, IPv6 selon une version plus récente de la norme. Les liens IP, a fortiori de type IPv6, peuvent consommer beaucoup d'énergie. Typiquement, une interface IPv6 (par exemple une paire de boîtiers de type Courant Porteur en Ligne) auquel serait connecté l'équipement via son câble Ethernet peut consommer entre 7 et 10 Watts. Au contraire, un lien sans fils de type WiFi consomme entre 2 et 3 Watts, et un lien ZigBee consomme à titre d'exemple seulement 250 mW (milli Watt). Il est donc particulièrement intéressant d'utiliser au maximum, dans une optique d'économie d'énergie, le lien de type Zigbee.

Le terminal (3) possède également, selon cet exemple, une interface dite secondaire, pour communiquer sur un réseau à basse consommation, aussi appelé selon la terminologie anglo-saxonne réseau *LoWPAN,* c'est-à-dire un réseau constitué typiquement d'un ensemble d'équipements ayant peu de ressources (de calcul, de batterie, etc.) reliés au travers d'un réseau lui-même limité en débit. Il peut s'agir d'une liaison radio typiquement de type Zigbee, ou Bluetooth BLE ou DECT ULE.

Notamment, le groupe de travail de l'IETF *6LoWPAN* a défini récemment des mécanismes d'encapsulation et de compression d'en-têtes permettant à des paquets de données au format IPv6 d'être envoyés et reçus via un protocole de communication sans fils sur un réseau *LoWPAN.*

Ces mécanismes d'encapsulation sont schématisés à la figure 2 : la pile de protocoles (12) de gauche est classiquement utilisée pour le transport de données sur un réseau IP (IPv6 dans l'exemple). Une telle couche protocolaire ne sera pas décrite plus avant car bien connue de l'homme du métier possédant les connaissances ordinaires dans le domaine des télécommunications.

La pile de protocoles de droite (13) est en revanche adaptée à un réseau *LoWPAN* : entre la couche liaison (MAC, BLE ou DECT ULE) et la couche réseau (IPv6) s'intercale une nouvelle couche *6LoWPAN* dont le rôle est de fragmenter les paquets de donnée IPv6 et éventuellement de compresser les en-têtes pour rendre les nouveaux fragments compatibles avec les couches inférieures de type IEEE 802.15.4 (couches physiques et de liaison des réseaux Zigbee). Des travaux existent également au sein de l'IETF pour adapter la couche *6LoWPAN* avec les couches physique et de liaison des réseaux DECT ULE (voir le document du groupe IETF - Internet Engineering Task Force - intitulé draft-ietf-6lowpan-btle-12 : " Transmission of IPv6 Packets over BLUETOOTH Low Energy' du 12/02/2013) et au Bluetooth LE (voir le document du groupe IETF intitulé "draft-mariager-6lowpan-v6over-dect-ule-03" : "Transmission of IPv6 Packets over DECT Ultra Low Energy" du 15/07/2013).

En plus de cette couche *6LoWPan,* les réseaux basse-consommation précités implémentent souvent le protocole de service COAP (de l'anglais *COnstrained Application Protocol*) (on se référera à la spécification « Constrained Application Protocol (CoAP) » du groupe IETF - CoRE Working Group Internet-Draft, Z. Shelby et al.) représenté sur la figure sous la couche applicative et au-dessus de la couche de transport UDP. Le protocole COAP définit un ensemble de messages permettant d'effectuer des transactions entre un client et un serveur (dans notre exemple, le terminal (3) et la passerelle (1)) dans un réseau *LoWPAN ou* sur un réseau IP standard.

Pour plus de détails, on se référera par exemple à l'article suivant, incorporé ici par référence : « Bridging UPnP and ZigBee with CoAP ; Protocol and its Performance Evaluation ; Jin Mitsugi et al. »

Dans cette implémentation, un point de contrôle au sens UPnP (Control Point - CP) est installé sur le terminal 2, par exemple une tablette informatique. Le point de contrôle a pour fonction de découvrir les équipements du réseau et de les mettre en relation. Par exemple, le point de contrôle présente le contenu du *Media Server* du terminal PC (3) à l'utilisateur et lui permet de le jouer sur le *Media Renderer* du même PC (3) selon l'enchaînement suivant : le point de contrôle parcourt (BROWSE) le contenu du *Media Server* et demande au *Media Renderer* de jouer (PLAY) l'un des contenus du Media Server.

Il est à noter que le point de contrôle peut se trouver sur un autre équipement, par exemple sur la passerelle domestique (1) ou sur le PC (3). Dans la plupart des cas, le point de contrôle est notamment localisé dans le même équipement que le *Media Renderer.*

Il est également à noter qu'un autre équipement du réseau local, par exemple non représenté, pourrait également être équipé d'une interface *Zigbee.*

Le principe de l'invention est le suivant : un dispositif intelligent, installé par exemple sur la passerelle (1) désactive l'interface IP (IPv6 selon l'exemple) du terminal (2) lorsque les conditions le permettent, afin de réaliser des économies d'énergie, et active l'interface secondaire, c'est-à-dire celle qui permet de dialoguer sur le *LoWPAN.*

Dès cet instant, le PC (3) doit émettre les messages qui signifient qu'il est actif (ALIVE) par le biais de son interface secondaire (par exemple l'interface ZigBee), qui reste seule active. Le dispositif selon l'invention se charge de recevoir et traiter ces messages. Le dispositif de l'invention a également pour charge de réactiver le réseau principal (IP) lorsqu'il détecte que les conditions ne sont plus adéquates pour maintenir la communication sur le réseau LoWPAN : un utilisateur souhaite être mis en relation avec le terminal (3) pour recevoir des données multimédia, la bande passante n'est plus suffisante (par exemple, si le volume de données est supérieur à un certain pourcentage de la bande passante disponible), etc. Dans ce cas, elle réactive l'interface principale de l'équipement et désactive l'interface secondaire.

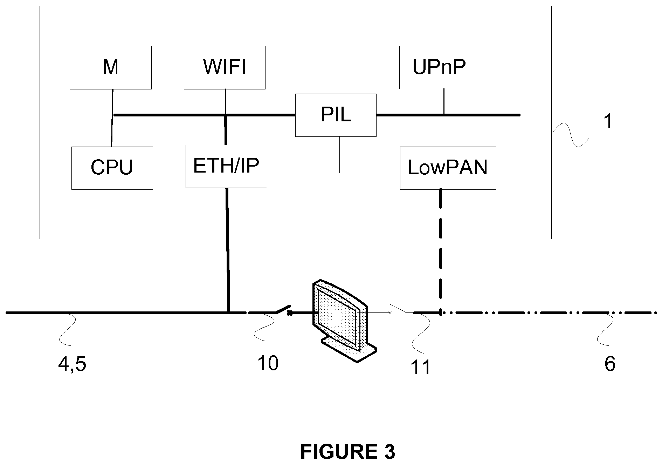

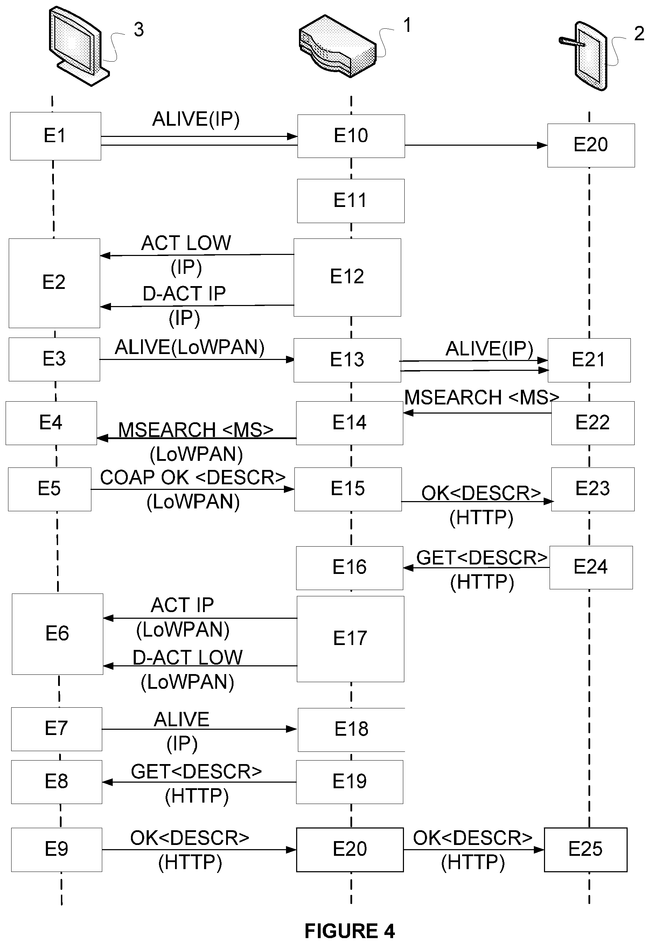

On va maintenant décrire l'invention plus en détails à l'appui des figures 3 et 4.

La figure 3 représente l'architecture d'un équipement qui implémente un mode de réalisation de l'invention, comme par exemple la passerelle (1) de la figure 1.

Il comprend, classiquement, des mémoires (M) associées à un processeur (CPU). Les mémoires peuvent être de type ROM (de l'anglais *Read Only Memory*) ou RAM (de l'anglais *Random Access Memory*) ou encore Flash. Une partie de la mémoire M contient notamment, selon l'invention, une table de description d'un ou plusieurs équipements du réseau et de leurs interfaces. Cette table est utilisée par le module PIL de pilotage des interfaces spécifique à l'invention.

Un exemple de description d'une telle table est fourni ci-dessous dans le contexte de la norme UPnP « Energy Management » ; on représente en syntaxe de description XML (de l'Anglais« eXtended Markup Language ») l'équipement terminal (3), en supposant qu'il dispose d'une interface Ethernet active et d'une interface *6LoWPAN* inactive.

### Exemple de description d'un terminal selon l'invention :

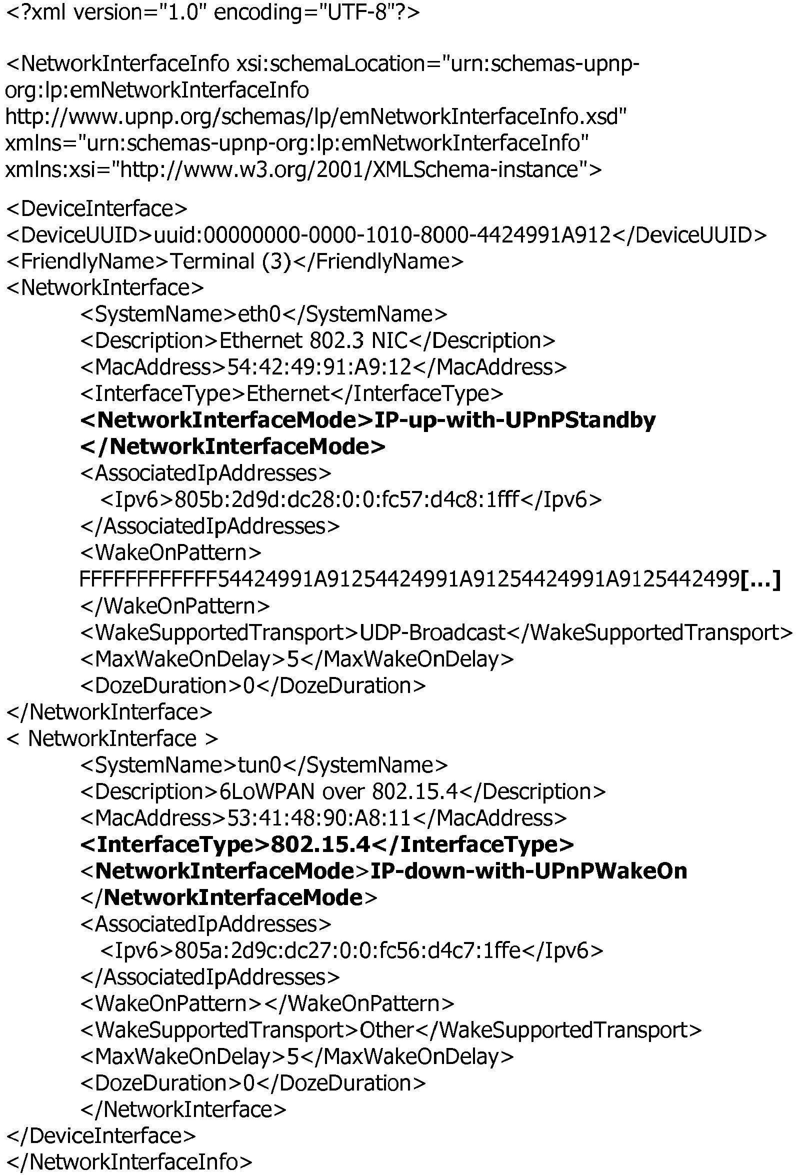

Ce fichier d'exemple comprend une liste de deux interfaces (*DeviceInterface*), chaque interface étant classiquement décrite entre une balise ouvrante <NetworkInterface > et une balise fermante </ NetworkInterface>.

La première interface est de type IP. Elle est active et désactivable par un nouveau message UPnP de l'invention (« IP-up-with-UPnPStandby »). Elle fonctionne classiquement sur un support Ethernet 802.3 ; elle est capable par ce moyen de recevoir des messages de réveil de type « Wake on Lan » (<WakeOnPattern >), qui permettent, de manière connue, à un équipement terminal en veille, d'être réveillé à distance.

La seconde interface est de type 6LoWPAN (<Description>6LoWPAN over 802.15.4C</Description>). Elle est inactive et activable par un nouveau message UPnP selon l'invention (« IP-down-with-UPnPWakeOn »). Elle fonctionne classiquement sur un support Ethernet 802.3. Le procédé selon l'invention réveille cette interface en transmettant un message « X_ WakeOn » sur l'interface IP.

La syntaxe XML du fichier représentatif des interfaces du terminal est globalement conforme à la norme UPnP « Energy Management » mentionnée auparavant, sauf pour ce qui concerne les deux éléments suivants :
- la balise « InterfaceType » permet de spécifier une interface à basse consommation, dans notre exemple de type Zigbee.
- la balise « NetworkInterfaceMode » permet de spécifier qu'une interface est désactivable (« IP-up-with-UPnPStandby ») par un nouveau message UPnP de l'invention, « X_Standby », dont une syntaxe possible est proposée ci-dessous, ou activable (« IP-down-with-UPnPWakeOn ») via le message « X_WakeOn. »

### Exemple de syntaxe pour le message X Standby :

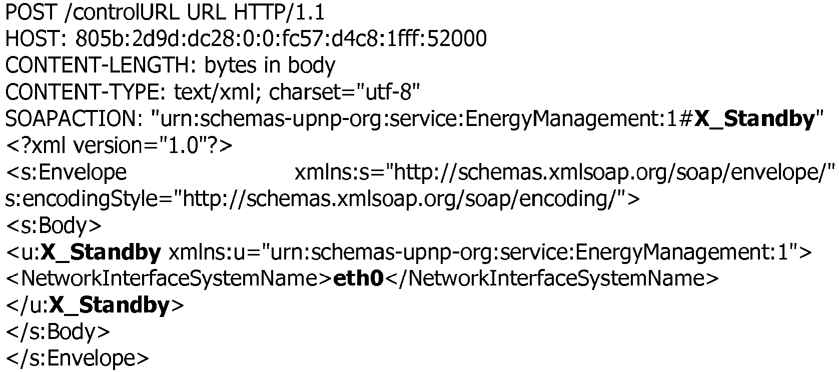

### Exemple de syntaxe pour le message X WakeOn :

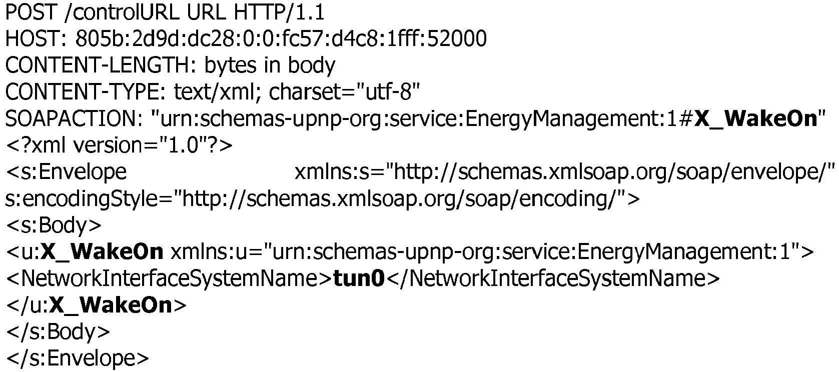

On notera que ces données XML ne constituent qu'un exemple de données de description et que l'invention peut également s'appliquer à des données de description conformes à un autre standard.

La passerelle 1 communique avec le réseau local et le réseau Internet via le module Ethernet/Internet (noté ETH/IP sur la figure), le module radio WIFI et le module radio Zigbee, noté LoWPAN, sur la figure.

Le module radio WIFI et le module filaire ETH/IP représentent ce qu'on appelle dans la suite l'interface principale communiquant à l'aide du protocole IPv6. L'interface Zigbee, LoWPAN, représente l'interface secondaire.

La passerelle 1 comprend en outre, conformément à ce mode de réalisation de l'invention, un module PIL de contrôle des interfaces (ETH/IP, WIFI, LoWPAN). Le module PIL peut être par exemple un programme logiciel s'exécutant dans la mémoire de la passerelle 1, ou un ensemble matériel et logiciel apte à contrôler les interfaces de communication.

L'équipement terminal (3) du réseau local comporte des interfaces équivalentes pour assurer la communication selon l'interface principale (IPv6) ou l'interface secondaire (LoWPAN).

Les deux interrupteurs 10 et 11 schématisent respectivement un moyen d'activation ou désactivation des interfaces IP et LoWPan du PC (3). Une commande en provenance du module PIL permet d'ouvrir ou de fermer le canal de communication en désactivant les interfaces correspondantes.

Ainsi les messages sont-ils transmis au terminal (3) via l'une ou l'autre de ses interfaces. Les messages doivent être encapsulés en respectant les familles de protocoles de communication sur l'un ou l'autre des liens, respectivement dans cet exemple la pile (12) avec *IPv6* pour l'interface principale et la pile (13) *6LoWPAN* pour l'interface secondaire, comme schématisé auparavant sur la figure 2.

On peut imaginer que le point de contrôle (CP selon la terminologie UPnP) se trouve à l'intérieur de la passerelle domestique (1) ; le CP communique alors avec les terminaux (sur l'exemple, les terminaux 2 et 3) via le réseau local (4,5) en mode filaire (Ethernet) ou sans fils ; alternativement, il peut être également situé à l'extérieur de la passerelle, comme représenté sur la figure 1.

De même le module PIL peut, alternativement, se trouver sur un autre équipement du réseau local.

La figure 4 représente les échanges entre un point de contrôle (CP) de type UPnP installé selon cet exemple sur une tablette (2) dans le réseau local, un dispositif de gestion de la communication via le pilotage des interfaces selon l'invention (PIL) installé sur la passerelle (1) et un équipement terminal (3) équipé d'un dispositif de communication et d'un *Media Server,* par exemple le *Media Server* de la figure 1.

L'équipement terminal (3) est accessible sur le réseau local via son adresse (typiquement une URL, de l'anglais *Uniform Ressource Locator,* comportant une combinaison d'adresse Internet (IP) et de numéro de port) via la passerelle domestique. L'équipement terminal et la passerelle comportent chacun deux types d'interface dites principale (IPv6) et secondaire (LoWPAN, Zigbee) permettant de dialoguer sur deux types de liens

Lors d'une étape E1, L'équipement terminal (3) émet sur le réseau local, en mode multicast, une annonce de type UPnP « ALIVE » pour signifier qu'il est présent et actif. Le message diffusé est schématisé sur la figure 3, comme tous les messages suivants, par le type de message (ALIVE) suivi des paramètres du message entre séparateurs< > et du type d'interface utilisé entre parenthèses (). Ainsi, « ALIVE(IP) » signifie-t-il que l'équipement terminal transmet son adresse via son interface IP, au format IP c'est-à-dire en respectant la syntaxe des paquets de données IPv6 selon cet exemple.

La syntaxe complète d'un tel message UPnP pourrait être de la forme :
*SSDP NOTIFY ssdp : alive ADRESSE_TERMINAL.*

Le message ALIVE est reçu dans l'exemple par le module PIL selon l'invention sur la passerelle domestique (1) au cours d'une étape E10 et par le point de contrôle sur la tablette (2) lors d'une étape E20.

Lors d'une étape E11, le module de pilotage PIL de l'invention détecte une activité faible sur le lien IP. Cette étape peut notamment être prise en charge par une tâche de fond du module PIL qui calcule, de manière permanente ou périodique, le nombre de paquets échangés sur le réseau IP, ou le pourcentage de bande passante occupée. Si l'activité sur le lien est jugée faible, le module PIL selon l'invention peut prendre la décision de désactiver temporairement le lien IP de l'équipement terminal (3), qui consomme plus d'énergie que le lien LoWPAN, afin d'économiser de l'énergie.

Dans un tel cas, lors d'une étape E12, le module de pilotage PIL envoie vers l'équipement terminal 3 une commande d'activation d'un réseau à basse consommation, symbolisée sur la figure 3 par la commande ACT_LOW. Cette commande est reçue lors d'une étape E2 par l'équipement terminal (3) qui active l'interface basse consommation, dans notre exemple Zigbee/LoWPAN. Lors d'une même étape E11, le module PIL selon l'invention désactive le lien IP via une commande de désactivation symbolisée par le message « D-ACT IP ». L'équipement terminal désactive son interface IPv6 et va donc maintenant transmettre ses messages via l'interface Zigbee/LoWPAN.

Lors d'une étape E3, l'équipement terminal (3) émet sur le réseau LoWPAN, une annonce de type UPnP ALIVE pour signifier qu'il est présent et actif, notée ALIVE(LoWPAN) signifiant que l'équipement terminal transmet son adresse via son interface LoWPAN (dans notre exemple, Zigbee) au format du réseau LoWPAN. Ce message est de type Unicast, c'est-à-dire qu'il est adressé uniquement à la passerelle (1).

La passerelle (1) retransmet le message au cours d'une étape E13 sur le réseau IP à destination du point de contrôle.

Selon une variante non représentée, l'équipement terminal (3) peut traduire son message « SSDP ALIVE » dans le format de la norme COAP précitée, au niveau de la couche service. (voir figure 2). Un tel format (COAP) permet de diffuser le message en mode multicast, c'est-à-dire vers plusieurs équipements. Dans ce cas cependant, la passerelle (1) doit reconvertir le message au format SSDP avant de le transmettre au point de contrôle et aux autres équipements du réseau si nécessaire.

Lors de l'étape E14 qui la suit, le module de pilotage PIL reçoit un message dit de requête en découverte (MSEARCH) de la part du point de contrôle (CP) de l'équipement terminal (2) qui est sollicité, par exemple, par un utilisateur désirant visualiser un film situé sur l'équipement terminal (3) et émet de ce fait une requête en découverte (MSEARCH<CIBLE>) pour rechercher tous les terminaux UPnP du réseau local de type correspondant à la cible, c'est-à-dire dans l'exemple tous les terminaux de type Media Server (en abrégé, MS). Dans la syntaxe UPnP, ce message est de la forme UPnP : SSDP MSEARCH cible.

Le module de pilotage PIL reçoit et analyse ce message au cours de l'étape E14, à la suite de quoi il transfère le message à l'équipement terminal (3) au format 6LoWPAN, à destination de son interface Zigbee (message MSEARCH<MS>(LOWPAN)).

La réponse de l'équipement terminal (3), issue de l'étape E5, est selon cet exemple conforme au protocole COAP introduit précédemment à l'appui de la figure 2, et peut prendre par exemple la syntaxe suivante :
*COAP 200 OK « URL 6LoWPAN du fichier de description XML »*

Le module de pilotage PIL de l'invention transfère alors le message vers le point de contrôle de l'équipement terminal (2), dans une syntaxe « standard » du réseau IP, c'est-à-dire un message HTTP (OK<DESCR>).

Le point de contrôle CP, s'il est intéressé par la cible découverte à l'étape E23, réagit alors au cours d'une étape E24 par l'envoi vers la passerelle d'un message HTTP de type GET<DESCR> pour récupérer davantage d'informations sur la cible découverte.

Lors d'une étape E17, le module de pilotage PIL détecte que le point de contrôle CP souhaite accéder à l'équipement terminal et décide d'activer l'interface IP (IPv6) du terminal (ACT IP). A la suite de ce message, il est en effet prévisible que le trafic devienne important puisque des donnés multimédia seront échangées entre les équipements. Le module PIL peut, à la suite de cette activation désactiver l'interface du réseau LoWPAN (D-ACT LOW).

Lorsqu'il reçoit ultérieurement (E18) un message ALIVE en provenance de l'interface IP de l'équipement terminal, le module PIL peut retransmettre le message HTTP GET en provenance du point de contrôle, au cours d'une étape E19 (HTTP GET<DESCR>), après avoir traduit l'adresse contenue dans la requête initiale. En effet, il existe à cet instant deux adresses IPv6 pour le message, correspondant aux deux interfaces principale et secondaire : adresse de l'interface 6LoWPAN et adresse IPv6 de l'interface IP.

Enfin, de manière classique, la passerelle transmet la réponse de l'équipement terminal (3) au point de contrôle, lors d'une étape E20, et le procédé de consommation du contenu de l'équipement terminal (3), dans le but par exemple d'une visualisation, peut alors commencer de manière tout à fait classique.

Selon une variante, suite à l'étape E16, le module de pilotage PIL peut choisir de laisser désactivée l'interface principale IPv4/IPv6 de l'équipement terminal. Dans ce cas, la requête HTTP GET du point de contrôle sera transmise au terminal sous le format « COAP GET ». La réponse du terminal « COAP OK » sera transmise au point de contrôle sous la forme « HTTP OK ».

Le module de pilotage PIL peut décider de réveiller l'interface principale en fonction de plusieurs critères, au nombre desquels on peut citer :
- Réception d'une requête de la part du point de contrôle qui va entraîner un transfert de données important. Par exemple, la requête reçue par le module PIL peut être de type UPnP BROWSE. La réception d'une telle requête laisse présager le transfert imminent d'un contenu multimédia entre le *Media Server* (3) et la passerelle (1).
- Absence de réponse (« *timeout*») ou réception d'une erreur en provenance de l'équipement terminal, qui pourrait signifier que l'équipement ne parvient pas à transmettre sa réponse sur le réseau 6LoWPAN.
- Bande passante du lien *6LoWPAN* utilisée à un certain pourcentage, par exemple 75% ou plus.
- Latence trop élevée entre l'envoi de la requête et la réponse (3 secondes par exemple).

## Revendications

1. Procédé de gestion de la communication sur un réseau local entre un premier équipement (Passerelle,1) et un second équipement (PC,3), lesdits équipements (3, 1) étant aptes à communiquer sur le réseau local via un premier lien de communication, dit lien principal (IP/ETH), et un second lien de communication, dit lien secondaire (LoWPAN), dont la consommation énergétique est inférieure à celle du premier lien de communication, ledit équipement **caractérisé en ce qu'**il comporte les étapes suivantes sur la passerelle du réseau local :
- Etablissement de la validité d'un critère relatif au trafic de données sur au moins un lien (IP/ETH, E11, LOWPAN) ;
- En fonction de la validité du critère, gestion de l'activation d'au moins un lien (IP/ETH, LOWPAN) et de la désactivation de l'autre lien ;
- Gestion de la communication du second équipement (3) avec un troisième équipement (2) du réseau local, en utilisant le lien activé.

2. Procédé de gestion de la communication selon la revendication 1, **caractérisé en ce que** le critère relatif au trafic de données est un seuil d'utilisation de la bande passante.

3. Procédé de gestion de la communication selon la revendication 1, **caractérisé en ce que** le critère relatif au trafic de données est un message reçu d'un type donné (BROWSE, GET).

4. Procédé de gestion de la communication selon la revendication 1, **caractérisé en ce que** le critère relatif au trafic de données est un temps d'attente pour la réception d'un message.

5. Procédé de gestion de la communication selon la revendication 1, **caractérisé en ce qu'**il comporte une étape d'activation (E12, ACT_LOW) du lien secondaire (LoWPAN) du terminal (3) et une étape de désactivation (E12, ACT_LOW) du lien principal (ETH/IP) du terminal (3) si le critère relatif au trafic de données est valide.

6. Procédé de gestion de la communication selon la revendication 1, **caractérisé en ce qu'**il comporte une étape d'activation (E12, ACT_LOW) du lien principal (ETH/IP) du terminal si le critère n'est pas valide (T, 75%)

7. Procédé de gestion de la communication selon la revendication 1, **caractérisé en ce que** l'envoi dudit message (MSEARCH <MS> (LoWPAN)) sur le lien secondaire est suivi des étapes de :
a. réception d'un message en provenance du second équipement (COAP OK<DESCR>) sur le lien secondaire (LowPAN) ;
b. Mise en forme (HTTP) et retransmission du message vers au moins un autre équipement (CP) du réseau.

8. Procédé de communication sur un équipement terminal (PC,3), ledit équipement étant apte à communiquer sur un réseau local via un premier lien de communication, dit lien principal (IP/ETH), et un second lien de communication, dit lien secondaire (LoWPAN), dont la consommation énergétique est inférieure à celle du premier lien de communication, **caractérisé en ce qu'**il comporte les étapes suivantes :
- mise en forme (E5, CoAP) d'au moins un message pour le lien secondaire (LoWPAN) et
- envoi dudit message sur le lien secondaire;

9. Dispositif de gestion d'une passerelle de réseau local pour gérer la communication (PIL) entre deux équipements, un premier équipement et un second équipement, lesdits équipements étant aptes à communiquer sur le réseau local via un premier lien de communication, dit lien principal, et un second lien de communication, dit lien secondaire, dont la consommation énergétique est inférieure à celle du premier lien de communication, **caractérisé en ce qu'**il comporte :
- un module d'établissement de la validité d'un critère relatif au trafic de données sur au moins un lien;
- un module de gestion de l'activation d'au moins un lien en fonction de la validité du critère ;
- un module de gestion de la désactivation de l'autre lien ;
- un module de gestion de la communication du second équipement (3) avec un troisième équipement (2) du réseau local en utilisant le lien activé.

10. Dispositif de communication sur un équipement terminal, ledit équipement étant apte à communiquer sur un réseau local via un premier lien de communication, dit lien principal, et un second lien de communication, dit lien secondaire, dont la consommation énergétique est inférieure à celle du premier lien de communication, **caractérisé en ce qu'**il comporte :
- un module de mise en forme (E5, CoAP) d'au moins un message (COAP-OK) pour le lien secondaire (LoWPAN) et
- un module d'envoi dudit message sur le lien secondaire.

11. Programme d'ordinateur apte à être mis en oeuvre sur un dispositif de passerelle domestique telle que défini dans la revendication 9, le programme comprenant des instructions de code qui, lorsque le programme est exécuté par un processeur, réalise les étapes du procédé défini selon la revendication 1.

12. Programme d'ordinateur apte à être mis en oeuvre sur un dispositif d'équipement terminal telle que défini dans la revendication 10, le programme comprenant des instructions de code qui, lorsque le programme est exécuté par un processeur, réalise les étapes du procédé défini selon la revendication 8.

## Patentansprüche

1. Verwaltungsverfahren der Kommunikation auf einem lokalen Netzwerk zwischen einem ersten Gerät (Gateway,1) und einem zweiten Gerät (PC,3), wobei die Geräte (3, 1) fähig sind, auf dem lokalen Netzwerk über eine erste Kommunikationsverbindung, Hauptverbindung (IP/ETH) genannt, und eine zweiten Kommunikationsverbindung, Sekundärverbindung (LoWPAN) genannt, zu kommunizieren, deren Energieverbrauch niedriger ist als derjenige der ersten Kommunikationsverbindung, wobei das Gerät **dadurch gekennzeichnet, dass** es die folgenden Schritte auf dem Gateway des lokalen Netzwerks aufweist:
- Feststellen der Gültigkeit eines Kriteriums bezüglich des Datenverkehrs auf mindestens einer Verbindung (IP/ETH, E11, LoWPAN);
- abhängig von der Gültigkeit des Kriteriums, Verwaltung der Aktivierung mindestens einer Verbindung (IP/ETH, LoWPAN) und der Deaktivierung der anderen Verbindung;
- Verwaltung der Kommunikation des zweiten Geräts (3) mit einem dritten Gerät (2) des lokalen Netzwerks unter Verwendung der aktivierten Verbindung.

2. Verwaltungsverfahren der Kommunikation nach Anspruch 1, **dadurch gekennzeichnet, dass** das Kriterium bezüglich des Datenverkehrs eine Benutzungsschwelle der Bandbreite ist.

3. Verwaltungsverfahren der Kommunikation nach Anspruch 1, **dadurch gekennzeichnet, dass** das Kriterium bezüglich des Datenverkehrs eine empfangene Nachricht eines gegebenen Typs (BROWSE, GET) ist.

4. Verwaltungsverfahren der Kommunikation nach Anspruch 1, **dadurch gekennzeichnet, dass** das Kriterium bezüglich des Datenverkehrs eine Wartezeit für den Empfang einer Nachricht ist.

5. Verwaltungsverfahren der Kommunikation nach Anspruch 1, **dadurch gekennzeichnet, dass** es einen Aktivierungsschritt (E12, ACT_LOW) der Sekundärverbindung (LoWPAN) des Endgeräts (3) und einen Deaktivierungsschritt (E12, ACT_LOW) der Hauptverbindung (ETH/IP) des Endgeräts (3) aufweist, wenn das Kriterium bezüglich des Datenverkehrs gültig ist.

6. Verwaltungsverfahren der Kommunikation nach Anspruch 1, **dadurch gekennzeichnet, dass** es einen Aktivierungsschritt (E12, ACT_LOW) der Hauptverbindung (ETH/IP) des Endgeräts aufweist, wenn das Kriterium nicht gültig ist (T, 75%) .

7. Verwaltungsverfahren der Kommunikation nach Anspruch 1, **dadurch gekennzeichnet, dass** auf das Senden der Nachricht (MSEARCH <MS> (LoWPAN)) auf der Sekundärverbindung die Schritte folgen:
a. Empfang einer Nachricht vom zweiten Gerät (COAP OK<DESCR>) auf der Sekundärverbindung (LowPAN);
b. Formatierung (HTTP) und Weiterleitung der Nachricht an mindestens ein anderes Gerät (CP) des Netzwerks.

8. Kommunikationsverfahren auf einem Endgerät (PC,3), wobei das Gerät fähig ist, auf einem lokalen Netzwerk über eine erste Kommunikationsverbindung, Hauptverbindung (IP/ETH) genannt, und eine zweite Kommunikationsverbindung, Sekundärverbindung (LoWPAN) genannt, zu kommunizieren, deren Energieverbrauch niedriger ist als derjenige der ersten Kommunikationsverbindung, **dadurch gekennzeichnet, dass** es die folgenden Schritte aufweist:
- Formatierung (ES, CoAP) mindestens einer Nachricht für die Sekundärverbindung (LoWPAN) und
- Senden der Nachricht auf der Sekundärverbindung.

9. Verwaltungsvorrichtung eines Gateways eines lokalen Netzwerks zur Verwaltung der Kommunikation (PIL) zwischen zwei Geräten, einem ersten Gerät und einem zweiten Gerät, wobei die Geräte fähig sind, auf dem lokalen Netzwerk über eine erste Kommunikationsverbindung, Hauptverbindung genannt, und eine zweite Kommunikationsverbindung, Sekundärverbindung genannt, zu kommunizieren, deren Energieverbrauch niedriger ist als derjenige der ersten Kommunikationsverbindung, **dadurch gekennzeichnet, dass** sie aufweist:
- ein Feststellungsmodul der Gültigkeit eines Kriteriums bezüglich des Datenverkehrs auf mindestens einer Verbindung;
- ein Verwaltungsmodul der Aktivierung mindestens einer Verbindung abhängig von der Gültigkeit des Kriteriums;
- ein Verwaltungsmodul der Deaktivierung der anderen Verbindung;
- ein Verwaltungsmodul der Kommunikation des zweiten Geräts (3) mit einem dritten Gerät (2) des lokalen Netzwerks unter Verwendung der aktivierten Verbindung.

10. Vorrichtung zur Kommunikation auf einem Endgerät, wobei das Gerät fähig ist, auf einem lokalen Netzwerk über eine erste Kommunikationsverbindung, Hauptverbindung genannt, und eine zweite Kommunikationsverbindung, Sekundärverbindung genannt, zu kommunizieren, deren Energieverbrauch niedriger ist als derjenige der ersten Kommunikationsverbindung, **dadurch gekennzeichnet, dass** sie aufweist:
- ein Formatierungsmodul (ES, CoAP) mindestens einer Nachricht (COAP-OK) für die Sekundärverbindung (LoWPAN) und
- ein Sendemodul der Nachricht auf der Sekundärverbindung.

11. Computerprogramm, das fähig ist, auf einer Home-Gateway-Vorrichtung wie in Anspruch 9 definiert durchgeführt zu werden, wobei das Programm Codeanweisungen enthält, die, wenn das Programm von einem Prozessor ausgeführt wird, die Schritte des nach Anspruch 1 definierten Verfahrens realisieren.

12. Computerprogramm, das auf einer Vorrichtung eines Endgeräts wie in Anspruch 10 definiert durchgeführt werden kann, wobei das Programm Codeanweisungen enthält, die, wenn das Programm von einem Prozessor ausgeführt wird, die Schritte des nach Anspruch 8 definierten Verfahrens realisieren.

## Claims

1. Method for managing the communication on a local area network between a first equipment (Gateway, 1) and a second equipment (PC, 3), said equipments (3, 1) being capable of communicating on the local area network via a first communication link, called the main link (IP/ETH), and a second communication link, called the secondary link (LoWPAN), the energy consumption of which is lower than that of the first communication link, said equipment **characterized in that** it has the following steps on the gateway of the local area network:
- establishment of the validity of a criterion relating to the data traffic on at least one link (IP/ETH, E11, LOWPAN);
- depending on the validity of the criterion, management of the activation of at least one link (IP/ETH, LOWPAN) and of the deactivation of the other link;
- management of the communication of the second equipment (3) with a third equipment (2) of the local area network, by using the activated link.

2. Method for managing the communication according to Claim 1, **characterized in that** the criterion relating to the data traffic is a use threshold for the bandwidth.

3. Method for managing the communication according to Claim 1, **characterized in that** the criterion relating to the data traffic is a received message of a given type (BROWSE, GET).

4. Method for managing the communication according to Claim 1, **characterized in that** the criterion relating to the data traffic is a waiting time for reception of a message.

5. Method for managing the communication according to Claim 1, **characterized in that** it has a step of activation (E12, ACT_LOW) of the secondary link (LoWPAN) of the terminal (3) and a step of deactivation (E12, ACT_LOW) of the main link (ETH/IP) of the terminal (3) if the criterion relating to the data traffic is valid.

6. Method for managing the communication according to Claim 1, **characterized in that** it has a step of activation (E12, ACT_LOW) of the main link (ETH/IP) of the terminal if the criterion is not valid (T, 75%) .

7. Method for managing the communication according to Claim 1, **characterized in that** the sending of said message (MSEARCH <MS> (LoWPAN)) on the secondary link is followed by the steps of:
a. reception of a message from the second equipment (COAP OK<DESCR>) on the secondary link (LowPAN);
b. formatting (HTTP) and retransmission of the message to at least one other equipment (CP) of the network.

8. Method for communication on a terminal equipment (PC, 3), said equipment being capable of communicating on a local area network via a first communication link, called the main link (IP/ETH), and a second communication link, called the secondary link (LoWPAN), the energy consumption of which is lower than that of the first communication link, **characterized in that** it has the following steps:
- formatting (E5, CoAP) of at least one message for the secondary link (LoWPAN) and
- sending of said message on the secondary link.

9. Device for managing a local area network gateway for managing the communication (PIL) between two equipments, a first equipment and a second equipment, said equipments being capable of communicating on the local area network via a first communication link, called the main link, and a second communication link, called the secondary link, the energy consumption of which is lower than that of the first communication link, **characterized in that** it has:
- a module for establishing the validity of a criterion relating to the data traffic on at least one link;
- a module for managing the activation of at least one link depending on the validity of the criterion;
- a module for managing the deactivation of the other link;
- a module for managing the communication of the second equipment (3) with a third equipment (2) of the local area network by using the activated link.

10. Device for communication on a terminal equipment, said equipment being capable of communicating on a local area network via a first communication link, called the main link, and a second communication link, called the secondary link, the energy consumption of which is lower than that of the first communication link, **characterized in that** it has:
- a module for formatting (E5, CoAP) at least one message (COAP-OK) for the secondary link (LoWPAN) and
- a module for sending said message on the secondary link.

11. Computer program capable of being implemented on a home gateway device as defined in Claim 9, the program comprising code instructions that, when the program is executed by a processor, performs the steps of the method defined according to Claim 1.

12. Computer program capable of being implemented on a terminal equipment device as defined in Claim 10, the program comprising code instructions that, when the program is executed by a processor, performs the steps of the method defined according to Claim 8.
